# EUROPÄISCHE PATENTANMELDUNG

(11) **EP 1 830 166 A2**
(43) Veröffentlichungstag der Anmeldung: **05.09.2007**
(21) Anmeldenummer: 07004205.6
(22) Anmeldetag: 01.03.2007
(51) Int. Cl.: G01L 9/06

(54) **Drucksensorvorrichtung**

(30) Priorität: 02.03.2006 DE 202006003446 U
(71) Anmelder: ETO Sensoric KG, 90441 Nürnberg (DE)
(72) Erfinder: Günther, Horst, 90473 Nürnberg (DE); Feirer, Oliver, 90409 Nürnberg (DE)
(74) Vertreter: Behrmann, Niels

(57) **Zusammenfassung**

Die Erfindung betrifft eine Drucksensorvorrichtung mit einem einen elektrischen Kontaktsteckerabschnitt (14) aufweisenden Gehäuse (10, 12), welches einen Druckkanal (24, 26) für einen im Gehäuse aufgenommenen Drucksensor anbietet, wobei das mehrteilig realisierte Gehäuse ein erstes Gehäuseteil (10) mit dem einstückig ansitzenden Kontaktsteckerabschnitt (14) und ein zum Zusammenwirken mit dem ersten Gehäuseteil ausgebildetes, den Druckkanal (26) realisierendes zweites Gehäuseteil (12) aufweist, eine modulartig realisierte, den Drucksensor tragende Druckaufnahmeeinheit (16, 18) so ausgebildet ist, dass in einem betriebstauglichen Verbindungszustand des ersten und des zweiten Gehäuseteils die Drucksensoreinheit zwischen Abschnitten (34, 36) beider Gehäuseteile fixiert ist und die Druckaufnahmeeinheit eine Verbindungseinheit (26) aufweist, die kabellos elektrisch leitend mit einem im Kontaktsteckerabschnitt gehaltenen Kontaktstift (28, 30) verbunden ist.

## Beschreibung

Die vorliegende Erfindung betrifft eine Drucksensorvorrichtung nach dem Oberbegriff des Hauptanspruches.

Eine derartige Vorrichtung ist aus dem Stand der Technik allgemein bekannt, etwa für den Bereich der KFZ-Technik, und weist ein Gehäuse mit einem Kontaktsteckerabschnitt auf, wobei die Stifte bzw. Kontaktelemente des Kontaktsteckerabschnittes dann über geeignete Verbinder, insbesondere Kabel, mit einer im Gehäuse aufgenommenen Drucksensorelektronik verbunden sind. Über einen im Gehäuse gebildeten Druckkanal steht ein Drucksensor als eigentliches signalgebendes Element in Verbindung mit dem zu messenden Medium, und ein Ausgangssignal des Drucksensors wird dann mittels der Auswerteelektronik und über den Kontaktstecker an nachgeschaltete Einheiten, etwa die zentrale KFZ-Steuerelektronik, geleitet.

Je nach Anwendungsgebiet werden derartige, gattungsbildende Vorrichtungen in sehr großen Stückzahlen produziert, wobei, neben Aspekten der Qualitätssicherung in der Fertigung, vor allem auch der notwendige herstellungstechnische Aufwand von Belang ist.

Nicht zuletzt die Notwendigkeit, die jeweiligen Kontaktstifte des Steckerabschnittes über (geeignet anzulötende bzw. zu crimpende) Drahtverbindungen mit der Sensorelektronik zu verbinden, ist herkömmlicher Weise der Produktionsaufwand beträchtlich, so dass insbesondere unter dem Gesichtspunkt der Großserienfertigung Optimierungsbedarf besteht.

Aufgabe der vorliegenden Erfindung ist es daher, eine Drucksensorvorrichtung nach dem Oberbegriff des Hauptanspruches in herstellungstechnischer Hinsicht zu verbessern, insbesondere für eine einfachere, potentiell zuverlässigere und preisgünstigere elektrische Verbindung zwischen den Kontaktelementen des Kabelsteckerabschnittes und dem Drucksensor bzw. der Drucksensorelektronik zu sorgen, wobei eine derartige Vorrichtung sich insbesondere für die Fertigung in Großserie eignen soll.

Die Aufgabe wird durch die Drucksensorvorrichtung mit den Merkmalen des Hauptanspruches gelöst; vorteilhafte Weiterbildungen der Erfindung sind in den Unteransprüchen beschrieben.

In erfindungsgemäß vorteilhafter Weise ist zunächst das Gehäuse mehrteilig mit einem ersten und einem zweiten Gehäuseteil realisiert, wobei diese so ausgebildet sind, dass im montierten Zustand zwischen diesen die (den eigentlichen Drucksensor sowie ggf. zugehörige Elektronik beinhaltende) Drucksensoreinheit fixiert gehalten werden kann. Damit lässt sich dann nicht nur die Montage vereinfachen, auch sorgt eine derartige konstruktive Realisierung für einen festen Sitz der Drucksensoreinheit.

Zusätzlich vorteilhaft ist der Druckaufnahmeeinheit eine Verbindungseinheit zugeordnet, welche weiterbildungsgemäß außerhalb von einer Gehäuse- bzw. Trägereinheit der Druckaufnahmeeinheit vorgesehen, gleichwohl mit dieser mechanisch und elektrisch verbunden ist. Eine derartige, bevorzugte platten- bzw. platinenförmige Verbindungseinheit ermöglicht es dann in konstruktiv einfacher, gleichwohl verbindungstechnisch sehr sicherer Weise, eine zuverlässige, drahtlose Verbindung zwischen Kontaktstiften des Kontaktsteckerabschnitts und der Elektronik bzw. dem Drucksensor in der Drucksensoreinheit herzustellen.

Genauer gesagt und gemäß einer bevorzugten Weiterbildung der Erfindung ist eine derartige plattenförmige Verbindungseinheit mechanisch so mit der Drucksensoreinheit verbunden, dass ein (aus Kunststoff oder Metall realisierter) Gehäuseabschnitt die mechanische Verbindung zwischen beiden Elementen herstellt, und auf eine Leiter-Oberfläche der Verbindungseinheit kann dann im montierten Zustand der Anordnung mindestens ein Kontaktstift kontaktierend auftreffen, weiterbildungsgemäß dort durch Löten, Schweißen und/oder Kleben leitend verbunden werden.

Eine derartige, durch die Erfindung vorgeschlagene Vorgehensweise ermöglicht damit nicht nur eine äußerst einfache und leicht automatisierbare Montage, auch stellt in elektrischer und mechanischer Hinsicht die so mögliche Kontaktierung eine Optimierung dar.

Im Ergebnis lässt sich so durch die vorliegende Erfindung eine Drucksensorvorrichtung schaffen, die bevorzugt für einen Einsatz im KFZ-Umfeld geeignet ist, prinzipiell aber auch für zahlreiche andere Anwendungsgebiete einsetzbar ist.

Je nach mechanisch-konstruktiver Ausgestaltung des Gehäuses und der weiterbildungsgemäß vorgesehenen Dicht- und/oder Sicherungselemente lassen sich verschiedene Schutzklassen realisieren, ferner EMV-Festigkeit sowie Sicherung gegen Verpolung und/oder Überspannung. Während es zudem, wie im nachfolgenden Ausführungsbeispiel beschrieben, bevorzugt ist, typische Kabel- und Steckernormen durch den erfindungsgemäßen Kontaktsteckerabschnitt zu realisieren, liegen beliebige Konfigurationen im Rahmen der Erfindung, ebenso wie die elektrotechnische und signaltechnische Ausgestaltung der Drucksensorvorrichtung durch das Vorsehen geeigneter Auswerte- und Verarbeitungstechnologie für die vom Drucksensor ausgegebenen Signale entweder innerhalb der Einheit selbst, oder aber im Rahmen extern nachgeschalteter Elektronik, etwa der KFZ-Steuerelektronik.

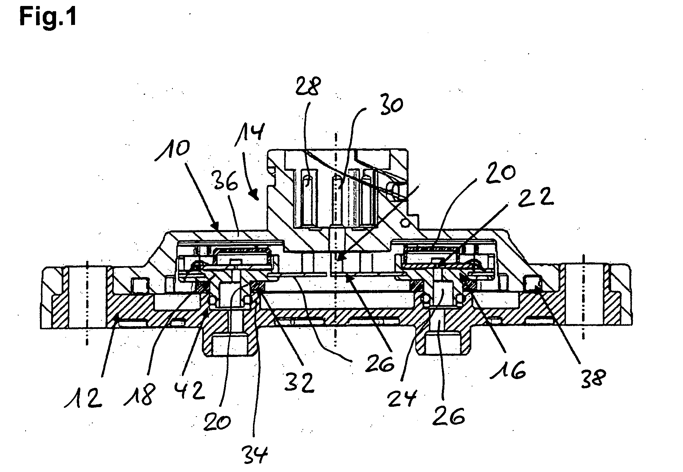

Weitere Vorteile, Merkmale und Einzelheiten der Erfindung ergeben sich aus der nachfolgenden Beschreibung eines bevorzugten Ausführungsbeispieles anhand der Zeichnungen; diese zeigen in der einzigen
- Fig. 1:: eine seitliche Schnittansicht durch die erfindungsgemäße Drucksensorvorrichtung gemäß einem ersten, bevorzugten Ausführungsbeispiel der Erfindung.

Ein durch ein oberes Gehäuseteil 10 und ein als Anschlussplatte realisiertes unteres Gehäuseteil 12 gebildetes flaches Gehäuse weist im Bereich des oberen Gehäuseteils 10 einen Kontaktsteckerabschnitt 14 auf, welcher im gezeigten Ausführungsbeispiel entsprechend DIN 72 585 ausgestaltet ist.

Das in der Fig. 1 im montierten Zustand gezeigte Gehäuse bietet in seinem Innenraum Platz zur Aufnahme von zwei Drucksensoreinheiten 16, 18 an, wobei dieses Paar von Drucksensoreinheiten selbst jeweils wiederum in einem Trägergehäuse 20 (realisiert aus einem geeignet spritzfähigen Kunststoffmaterial) druckdicht aufgenommen ist. Genauer gesagt ist in jedem dieser Trägergehäuse 20 ein ansonsten bekannter Drucksensor 22 als signalgebendes Element enthalten, ggf. zusätzlich verbunden mit einer ersten Verstärkerstufe oder anderer Auswerteelektronik. Die Druckeintragseite des jeweiligen Drucksensors ist offen in Richtung auf einen in der Fig. 1 abwärts gerichteten Druckkanal, der einerseits durch einen bodenseitigen Durchbruch 24 in den Trägergehäusen 20, zusätzlich durch einen Druckkanaldurchbruch 26 im unteren Gehäuseteil 12 realisiert ist, so dass ein durch die Drucksensoreinheiten 16, 18 zu messender, bodenseitig anliegender Druck aufwärts bis hin zu den (in druckdichten Gehäusen 20 gehaltenen) Sensoren übertragen werden kann.

Jeweils seitlich aus den Trägergehäusen 20 herausragend, weist jede der Drucksensoreinheiten 16, 18 eine Verbindungsvorrichtung in Form einer Kontaktplatine 26 auf, welche in der in Fig. 1 gezeigten Weise den elektrischen Kontakt zu Kontaktstiften 28, 30 des Kontaktsteckerabschnitts 14 herstellt. Genauer gesagt greifen die abwärts gerichteten Endabschnitte von Kontaktstiften 28, 30 auf diesen geeignet zugeordnete Leiterbahnabschnitte der Kontaktplatinen 26 und sind dort mittels geeigneter Kontaktverfahren, insbesondere Löten oder Schweißen, verbunden. Die Leiterbahnen sind dann im Bereich der Trägergehäuse 20 wiederum durch geeignete Kontaktverfahren mit der Elektronik der Drucksensoreinheiten 16, 18 verbunden, typischerweise durch Bonden oder ein vergleichbares, bevorzugt gut automatisierbares Kontaktverfahren.

Wie die Gesamtansicht der Fig. 1 verdeutlicht, ist auf diese Weise nicht nur eine elektrisch sehr zuverlässige und automatisiert fertigbare Verbindung herstellbar, auch ist diese mechanisch belastbar und zuverlässig: Wie die Fig. 1 verdeutlicht, sind nämlich die Drucksensoreinheiten 16, 18 in der gezeigten Weise zwischen dem oberen Gehäuseteil und dem unteren Gehäuseteil 12 gehalten, wobei elastische Elemente 32 es ermöglichen, dass mittels geeigneter Vorsprünge 34 des unteren Gehäuseteils 12 eine elastische Vorspannung auf die Drucksensoreinheiten gegen Flachseiten 36 des oberen Gehäuseteils 10 als Widerlager gedrückt werden. Damit lassen sich nicht nur eventuelle Montagetoleranzen gut ausgleichen, auch erfolgt eine günstige Schwingungsdämpfung gegen etwaige Beeinflussungen im Fahrzeugeinsatz.

Die Abdichtung des gesamten Sensorgehäuses geschieht im gezeigten Ausführungsbeispiel durch eine Ringdichtung 38, welche im äußeren Bereich um die scheibenförmige Anordnung umläuft und in einer geeigneten Ringnut des oberen Gehäuseteils 10 gehalten ist. Druckkanaldichtungen 42 sorgen im gezeigten Ausführungsbeispiel für eine druckdichte Abdichtung der Druckkanäle 24, 26 gegenüber dem Gehäuseinnenraum.

Im Ergebnis liegt damit eine Drucksensoranordnung vor, bei welcher sowohl die einzelnen, modulartig ausgestalteten Komponenten, als auch die Gesamtanordnung vollständig automatisiert zusammengefügt werden können, so dass insbesondere arbeitsaufwändige Montageschritte, wie aus dem Stand der Technik bekannt -- vor allem fehleranfällige Montage von Drähten --, vollständig vermieden werden können. Damit eignet sich die so geschaffene Vorrichtung besonders für durch Vibration, Schmutz und/oder Feuchtigkeit belastete Einsatzumgebungen, wie es etwa im KFZ-Bereich der Fall ist; prinzipiell sind jedoch nahezu beliebige andere Einsatzgebiete denkbar.

Auch ist die vorliegende Erfindung nicht auf das gezeigte Ausführungsbeispiel beschränkt, vielmehr ist etwa die aufzunehmende Anzahl von Drucksensoreinheiten abhängig von einem jeweiligen Einsatzzweck, ebenso wie auch die Ausgestaltung der Drucksensoreinheiten selbst (also entweder in einem Träger aus Kunststoff oder Metall druckdicht verklebt, wie im vorliegenden Ausführungsbeispiel, oder auf andere Weise modulartig oder diskret aufgebaut), ferner sind zahlreiche alternative Kontaktmöglichkeiten zwischen Kontaktplatine und Drucksensorelektronik im Trägergehäuse denkbar, und auch die im Ausführungsbeispiel gezeigte flache Bauform würde, je nach gewünschtem Einsatzzweck, geeignet anders auszugestalten sein.

## Patentansprüche

1. Drucksensorvorrichtung mit einem einen elektrischen Kontaktsteckerabschnitt (14) aufweisenden Gehäuse (10, 12), welches einen Druckkanal (24, 26) für einen im Gehäuse aufgenommenen Drucksensor anbietet,
**dadurch gekennzeichnet,**
**dass** das mehrteilig realisierte Gehäuse ein erstes Gehäuseteil (10) mit dem einstückig ansitzenden Kontaktsteckerabschnitt (14) und ein zum Zusammenwirken mit dem ersten Gehäuseteil ausgebildetes, den Druckkanal (26) realisierendes zweites Gehäuseteil (12) aufweist,
eine modulartig realisierte, den Drucksensor tragende Druckaufnahmeeinheit (16, 18) so ausgebildet ist, dass in einem betriebstauglichen Verbindungszustand des ersten und des zweiten Gehäuseteils die Drucksensoreinheit zwischen Abschnitten (34, 36) beider Gehäuseteile fixiert ist und
die Druckaufnahmeeinheit eine Verbindungseinheit (26) aufweist, die kabellos elektrisch leitend mit einem im Kontaktsteckerabschnitt gehaltenen Kontaktstift (28, 30) verbunden ist.

2. Vorrichtung nach Anspruch 1, **dadurch gekennzeichnet, dass** die Druckaufnahmeeinheit ein druckdichtes Trägergehäuse (20) für den Drucksensor ausbildet, an welchem die Verbindungseinheit außen ansitzt.

3. Vorrichtung nach Anspruch 2, **dadurch gekennzeichnet, dass** die plane Verbindungseinheit zumindest abschnittsweise von Material des Trägergehäuses einstückig umschlossen, insbesondere von einem Kunststoffmaterial des Trägergehäuses umspritzt ist.

4. Vorrichtung nach einem der Ansprüche 1 bis 3, **dadurch gekennzeichnet, dass** die Verbindungseinheit leiterplattenartig realisiert ist.

5. Vorrichtung nach Anspruch 3 oder 4, **dadurch gekennzeichnet, dass** eine elektrische Verbindung zwischen der Verbindungseinheit und dem Drucksensor und/oder einer dem Drucksensor im Trägergehäuse zugeordneten Elektronik durch eine Bondverbindung realisiert ist.

6. Vorrichtung nach einem der Ansprüche 1 bis 5, **dadurch gekennzeichnet, dass** die kabellose, elektrisch leitende Verbindung zwischen der Verbindungseinheit und dem Kontaktstift durch Löten, Schweißen oder Kleben realisiert ist.

7. Vorrichtung nach einem der Ansprüche 1 bis 6, **dadurch gekennzeichnet, dass** das erste und zweite Gehäuseteil mittels einer umlaufenden, insbesondere ringförmigen Dichtung (40) dichtend miteinander verbunden ist.

8. Vorrichtung nach einem der Ansprüche 1 bis 7, **dadurch gekennzeichnet, dass** ein Angriffsabschnitt (34) des ersten oder zweiten Gehäuseteils über ein zwischenliegendes elastisches Element (32) auf die Drucksensoreinheit (16, 18) gegen einen zugehörigen Angriffsabschnitt (36) des zweiten bzw. ersten Gehäuseteils als Widerlager wirkt.

9. Vorrichtung nach einem der Ansprüche 1 bis 8, **dadurch gekennzeichnet, dass** das Gehäuse zur Montage an einem Fahrzeugrahmen ausgebildet und geeignet ist.
